# EUROPEAN PATENT APPLICATION

(11) **EP 1 708 509 A2**
(43) Date of publication of application: **04.10.2006**
(21) Application number: 05026621.2
(22) Date of filing: 06.12.2005
(51) Int. Cl.: H04N 7/26, H04N 7/50, H04N 7/30

(54) **Hardware implementation of inverse scan for a plurality of standards**

(30) Priority: 01.04.2005 US 96604
(71) Applicant: Broadcom Corporation, Irvine, CA 92618-7013 (US)
(72) Inventor: Sherigar, Bhaskar, 560078 Bangalore (IN); Tongle, Anand, New Tipp Sandra Post 560075 (IN)
(74) Representative: Jehle, Volker Armin

(57) **Abstract**

Presented herein are hardware implementations for inverse scanning for a plurality of standards. In one embodiment, there is presented a system for decoding video data. The system comprises an inverse scanner for inverse scanning video data encoded in accordance with a first encoding standard and for inverse scanning video data encoded in accordance with a second encoding standard. In another embodiment, there is presented a decoder for decoding video data. The decoder comprises an inverse scanner. The inverse scanner is operable to inverse scan video data encoded in accordance with a first encoding standard and inverse scan video data encoded in accordance with a second encoding standard.

## Description

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

There are a number of different standards that are available for compressing video data. These standards include standards promulgated by the Motion Picture Experts Group (MPEG). The standards promulgated by MPEG include MPEG-2, and MPEG-4, Part 10 (also known as Advanced Video Coding and also known and now referred to as H.264).

A number of video decoder systems are capable of decoding both MPEG-2 and H.264. However, VC-1 is a recent standard promulgated by the Society for Motion Pictures and Television Engineers (SMPTE) and promoted by Microsoft Corporation. Although there are similarities between VC-1 and H.264, VC-1 also includes a number of differences.

Further limitations and disadvantages of conventional and traditional approaches will become apparent to one of ordinary skill in the art through comparison of such systems with the present invention as set forth in the remainder of the present application with reference to the drawings.

### BRIEF SUMMARY OF THE INVENTION

Presented herein are hardware implementations for inverse scanning for a plurality of standards, substantially as shown in and/or described in connection with at least one of the figures, as set forth more completely in the claims.
According to an aspect of the invention, a system for decoding video data is provided, said system comprising:
an inverse scanner for inverse scanning video data encoded in accordance with a first encoding standard and for inverse scanning video data encoded in accordance with a second encoding standard.
Advantageously, the first encoding standard is MPEG-2 and the second encoding standard is H.264.
Advantageously, the inverse scanner inverse scans video data encoded in accordance with a third encoding standard.
Advantageously, the first encoding standard is MPEG-2, the second encoding standard is H.264, and the third encoding standard is VC-1.
Advantageously, the inverse scanner further comprises:
a memory for storing inverse scanning tables associated with one of the first encoding standard, second encoding standard, and third encoding standard; and
a control processor for writing the tables associated with the one of the first encoding standard, second encoding standard, and third encoding standard to the memory.
Advantageously, the inverse scanner further comprises:
an inverse scanner comprising inverse scan control unit and inverse scan datapath, for reading a particular one of the tables associated with the one of the first encoding standard, second encoding standard, and third encoding standard, and inverse scanning frequency coefficients in accordance with the particular one of the tables, thereby generating inverse scanned frequency coefficients.
Advantageously, the inverse scanner further comprises:
a buffer for storing the frequency coefficients and the inverse scanned frequency coefficients.
According to an aspect of the invention, a decoder for decoding video data is provided, said decoder comprising:
an inverse scanner operable to inverse scan video data encoded in accordance with a first encoding standard and for inverse scanning video data encoded in accordance with a second encoding standard.
Advantageously, the first encoding standard is MPEG-2 and the second encoding standard is H.264.
Advantageously, the inverse scanner is operable to inverse scan video data encoded in accordance with a third encoding standard.
Advantageously, the first encoding standard is MPEG-2, the second encoding standard is H.264, and the third encoding standard is VC-1.
Advantageously, the inverse scanner further comprises:
a memory operable to store inverse scanning tables associated with one of the first encoding standard, second encoding standard, and third encoding standard; and
a control processor operably connected to the memory to write the tables associated with the one of the first encoding standard, second encoding standard, and third encoding standard to the memory.
Advantageously, the inverse scanner further comprises:
an inverse scanner operably connected to the memory to read a particular one of the tables associated with the one of the first encoding standard, second encoding standard, and third encoding standard, and inverse scan frequency coefficients in accordance with the particular one of the tables, thereby generating inverse scanned frequency coefficients.
Advantageously, the inverse scanner further comprises:
a buffer operably connected to the inverse scanning engine for storing the frequency coefficients and the inverse scanned frequency coefficients.
According to an aspect of the invention, a method for inverse scanning frequency coefficients is provided, said method comprising:
writing one of more tables associated with a particular one of a plurality of video encoding standards to a memory;
receiving an address to the memory, the address indicating a location in the memory of a particular one of the one or more tables;
inverse scanning the frequency coefficients in accordance with the particular one of the one or more tables.
Advantageously, the plurality of encoding standards comprises MPEG-2 and H.264.
Advantageously, the plurality of encoding standards comprises MPEG-2, H.264, and VC-1.

These and other advantages and novel features of the present invention, as well as details of an illustrated embodiment thereof, will be more fully understood from the following description and drawings.

### BRIEF DESCRIPTION OF SEVERAL VIEWS OF THE DRAWINGS

**FIGURE 1** is a block diagram describing the encoding of video data;

**FIGURE 2** is a block diagram describing a video decoder in accordance with an embodiment of the present invention;

**FIGURE 3** is a block diagram describing an exemplary inverse quantizer in accordance with an embodiment of the present invention;

**FIGURE 4** is a block diagram describing a circuit for inverse scanning video data encoded with a plurality of video encoding standard in accordance with an embodiment of the present invention; and

**FIGURE 5** is a flow diagram for inverse scanning video data encoded with a plurality of video encoding standard in accordance with an embodiment of the present invention.

### DETAILED DESCRIPTION OF THE INVENTION

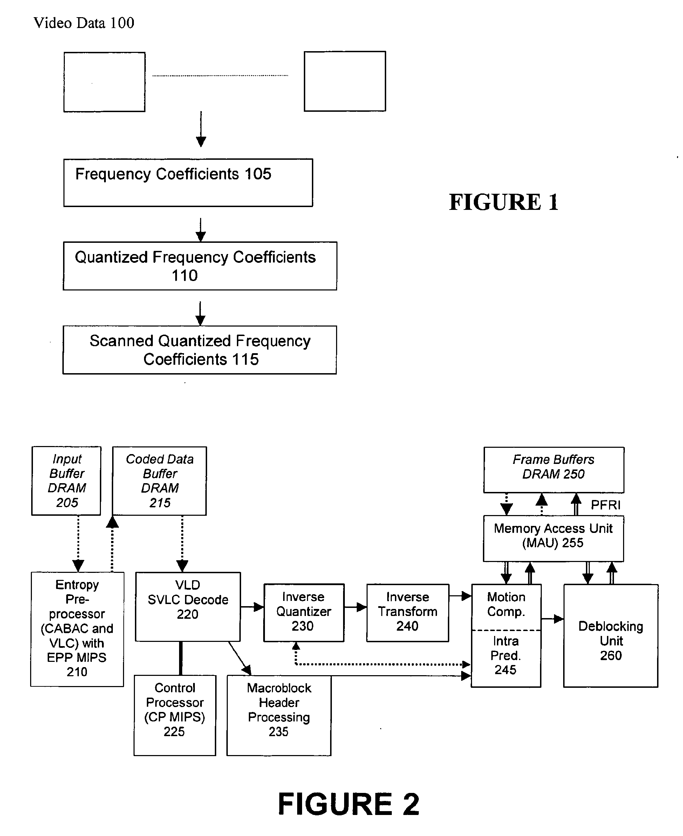

Referring now to **FIGURE 1,** there is illustrated a block diagram describing the encoding of video data. Video data comprises a series of pictures 100. The video data is compressed using a variety of techniques that take advantage of both temporal and spatial redundancies. Pixel-to-frequency transformations are applied to take advantage of spatial redundancies. The transformation result in a set of frequency coefficients 105. The frequency coefficients 105 are then quantized 110. The quantization further compresses the video data by controlling the numbers of bits that are used to quantize the frequency coefficients. Additional compression techniques are then used to further compress the video data. Additionally, the frequency coefficients are rearranged in a specific order that is calculated to move larger coefficients towards the beginning and smaller coefficients and zeros towards the end. This is known as scanning.

The scanning techniques used depend on the encoding standard. The encoding standards include standards promulgated by the Motion Picture Experts Group (MPEG) and that promulgated by the Society for Motion Pictures and Television Engineers (SMPTE) and promoted by Microsoft Corporation. The standards promulgated by MPEG include MPEG-2 and MPEG-4, Part 10 (also known as Advanced Video Coding and also known and now referred to as H.264). VC-1 is a standard promulgated by the SMPTE, and promoted by Microsoft Corporation (as WM9 or Windows Media 9).

Referring now to **FIGURE 2,** there is illustrated a block diagram describing an exemplary video decoder 200 in accordance with an embodiment of the present invention. The video decoder 200 comprises an entropy pre-processor 205, a coded data buffer 210, a variable length decoder 215, a control processor 220, an inverse quantizer 230, a macroblock header processor 235, an inverse transformer 240, a motion compensator 245, frame buffers 250, a memory access unit 255, and deblocker 260. The foregoing can be implemented as hardware accelerators under the control of a control processor 225.

The entropy pre-processor 205 receives encoded video data. The encoded video data can comprise entropy coded symbols. The entropy pre-processor 205 decodes the entropy coded symbols. The entropy pre-processor 205 writes the symbols to the coded data buffer 210. The variable length decoder 215 decodes variable length codes in the encoded video data.

The foregoing results in quantized frequency coefficients 110 and macroblock headers. The inverse quantizer 230 inverse quantizes the quantized frequency coefficients 110, resulting in frequency coefficients 105. The inverse transformer 240 inverse transforms the frequency coefficients 105, resulting in pixel data. The motion compensator 245 motion compensates the pixel data, using previously decoded pictures 100 stored in the frame buffers 255.

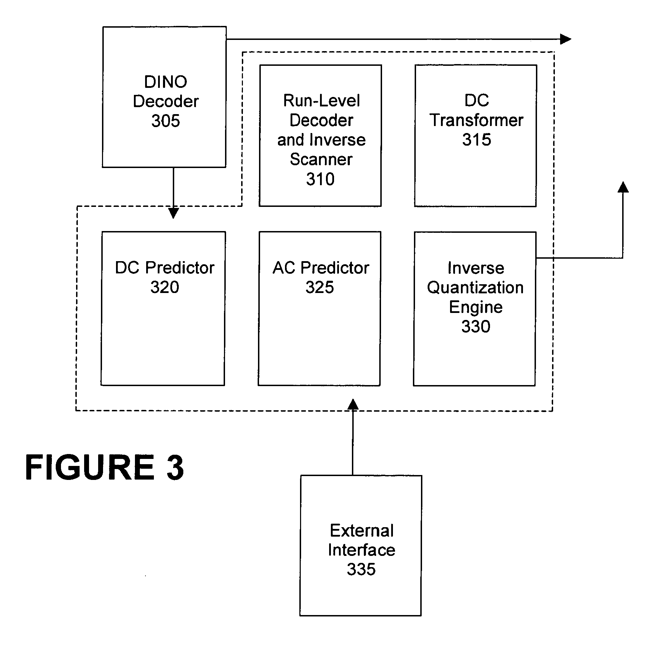

Referring now to **FIGURE 3,** there is illustrated a block diagram describing an exemplary inverse quantizer 230 in accordance with an embodiment of the present invention. The inverse quantizer 230 comprises a run level decoder and inverse scanner 310, a DC transformer 315, a DC predictor 320, an AC predictor 325, an inverse quantization engine 330, and external interfaces 335.

### AC Prediction:

The AC predictor 325 performs AC prediction if AC prediction is enabled for the current block under decode. AC prediction is present in the VC-1 video standard. The DC-Predictor 320 supplies the prediction direction and the prediction data will be from either the top row or the left column. The prediction coefficients are written to a DRAM.

### DC Transform:

The DC transformer 315 performs matrix multiplication of the DC-only luma and chroma sub-blocks of AVC with the constant matrix. The constant matrix has signed unit coefficients. Based on this fact, matrix multiplication is performed by add-accumulate operation. There are two passes in the DC transform for two set of matrix multiplication.

### Inverse Quantization:

The inverse quantization engine 330 supports inverse quantization for a plurality of video encoding standards. In certain embodiments of the present invention, seven types of the inverse quantization present based on the block-type (video standard under decode), where MPEG2 has two types, AVC has three types and VC-1 has two types, are supported. The type of the Inverse quantization depends on the macro-block type and Luma-chroma blocks (sub-blocks). The inverse quantizer can comprise the inverse quantizer described in U.S. Patent Application, Serial No. , "Optimized Single Inverse Quantization Engine for a Plurality of Standards", filed by Sherigar on ,

### Run-Level Decoder/DC Prediction/Inverse Scan

The run level decoder/inverse scanner 320 and DC predictor 320 can be clubbed in a single data path if their operations are sequentially dependent. The run level decoder/inverse scanner 310 does the "zero" filling operation, decided by the run count of the current run-level pair. DC predictor 320 performs DC prediction if DC prediction is enabled for the current block. This is present in intra blocks of VC-1. This is done by choosing the prediction direction, which is based on the relative DC values of the neighboring left, top and diagonal blocks.

The inverse scan operation is accomplished by providing a correct address of a buffer based on a lookup table value. These lookup table values are programmed during the picture level initialization.

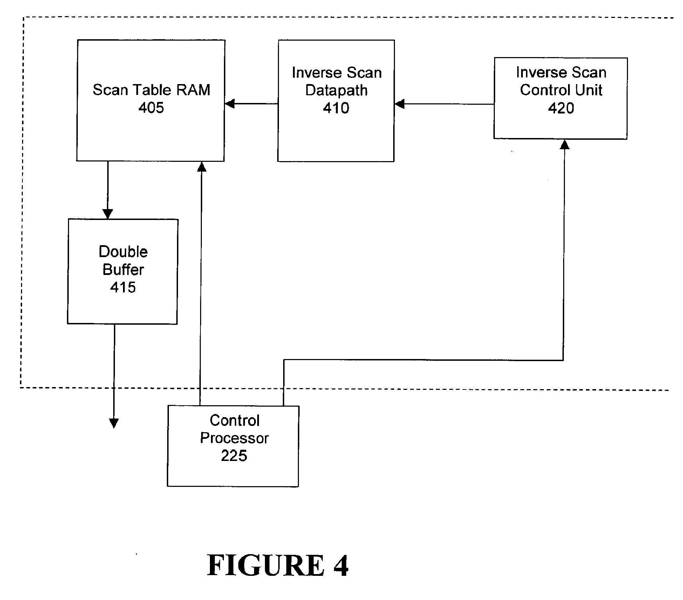

Referring now to **FIGURE 4,** there is illustrated a block diagram describing an exemplary inverse scanner 310 in accordance with an embodiment of the present invention. The inverse scanner 310 comprises a scan table RAM 405, an inverse scan datapath 410, and a double buffer 415.

The inverse scanner 310 is controlled by control processor 225. At the beginning of each picture, the control processor 225 loads the scan table RAM 405 with the tables associated with the encoding standard for the video data. In certain embodiments, control processor 225 can load the scan table RAM 405 with the tables for inverse scanning that are associated with the MPEG-2, H.264, and VC-1 standards.

The inverse scan datapath logic 410 receives input control signals indicating the encoding standard of the picture, the type of scan, and an address to the scan table RAM 405. The address points to the scan address in the scan table RAM 405 at which the appropriate inverse scanning table for inverse scanning the video data is stored. The output of the RAM 405 is used as the address for storing the frequency coefficients in double buffer 415. The double buffer 415 stores the frequency coefficients in one portion. The inverse scanning engine 410 writes the inverse scanned frequency coefficients to the another portion of the double buffer 415.

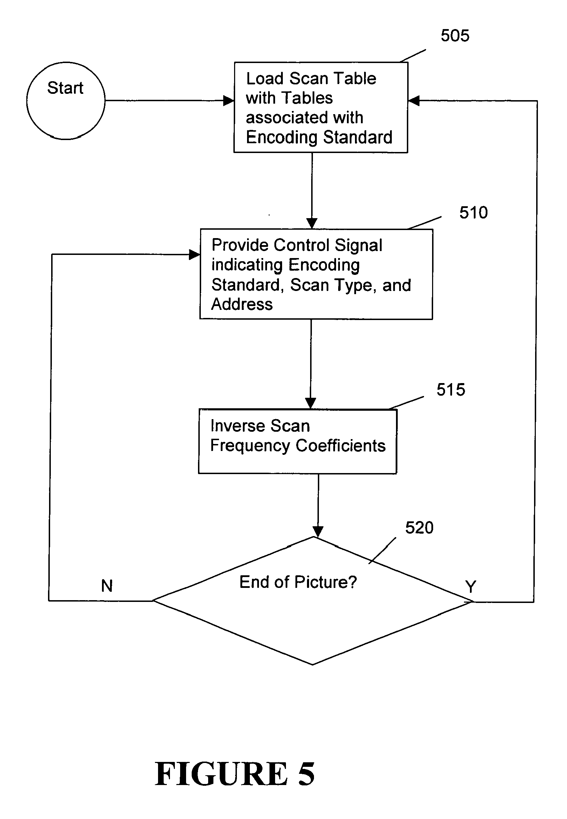

Referring now to **FIGURE 5,** there is illustrated a flow diagram for inverse scanning video encoded with a plurality of video encoding standards, in accordance with an embodiment of the present invention.

At 505, at the beginning of the picture, the control processor 225 loads the scan table 405 with tables associated with the encoding standard for the video data. In certain embodiments, control processor 225 can load the scan table RAM 405 with the tables for inverse scanning that are associated with the MPEG-2, H.264, and VC-1 standards.

At 510, the inverse scan control unit 420 provides the input control signals indicating the encoding standard of the picture, TYPE, the type of scan, SCAN, and an address to the scan table RAM 405, ADDR.

At 515, the inverse scan datapath 410 sends the address to read from the address ADDR in the scan table RAM 405 and applies the table to the frequency coefficients, to store in double buffer. The double buffer 415 stores the frequency coefficients in one portion. The inverse scanning engine 410 writes the inverse scanned frequency coefficients to the another portion of the double buffer 415. After 515, if at 520 the picture is completed, 505 is repeated. If not, 510 is repeated.

The embodiments described herein may be implemented as a board level product, as a single chip, application specific integrated circuit (ASIC), as part of an ASIC containing other functions, or with varying levels of the decoder system integrated with other portions of the system as separate components.

The degree of integration of the decoder system may primarily be determined by the speed and cost considerations. Because of the sophisticated nature of modern processor, it is possible to utilize a commercially available processor, which may be implemented external to an ASIC implementation. If the processor is available as an ASIC core or logic block, then the commercially available processor can be implemented as part of an ASIC device wherein certain functions can be implemented in firmware. Alternatively, the functions can be implemented as hardware accelerator units controlled by the processor.

While the present invention has been described with reference to certain embodiments, it will be understood by those skilled in the art that various changes may be made and equivalents may be substituted without departing from the scope of the present invention. For example, the inverse scanning can occur before or after the inverse quantization. Accordingly, the term "frequency coefficients" shall be understood to cover both quantized and inverse quantized frequency coefficients. In addition, many modifications may be made to adapt a particular situation or material to the teachings of the present invention without departing from its scope.

Therefore, it is intended that the present invention not be limited to the particular embodiment disclosed, but that the present invention will include all embodiments falling within the scope of the appended claims.

## Claims

1. A system for decoding video data, said system comprising:
an inverse scanner for inverse scanning video data encoded in accordance with a first encoding standard and for inverse scanning video data encoded in accordance with a second encoding standard.

2. The system of claim 1, wherein the first encoding standard is MPEG-2 and the second encoding standard is H.264.

3. The system of claim 1, wherein the inverse scanner inverse scans video data encoded in accordance with a third encoding standard.

4. The system of claim 3, wherein the first encoding standard is MPEG-2, the second encoding standard is H.264, and the third encoding standard is VC-1.

5. The system of claim 3, wherein the inverse scanner further comprises:
a memory for storing inverse scanning tables associated with one of the first encoding standard, second encoding standard, and third encoding standard; and
a control processor for writing the tables associated with the one of the first encoding standard, second encoding standard, and third encoding standard to the memory.

6. A decoder for decoding video data, said decoder comprising:
an inverse scanner operable to inverse scan video data encoded in accordance with a first encoding standard and for inverse scanning video data encoded in accordance with a second encoding standard.

7. The decoder of claim 6, wherein the first encoding standard is MPEG-2 and the second encoding standard is H.264.

8. The decoder of claim 6, wherein the inverse scanner is operable to inverse scan video data encoded in accordance with a third encoding standard.

9. A method for inverse scanning frequency coefficients, said method comprising:
writing one of more tables associated with a particular one of a plurality of video encoding standards to a memory;
receiving an address to the memory, the address indicating a location in the memory of a particular one of the one or more tables;
inverse scanning the frequency coefficients in accordance with the particular one of the one or more tables.

10. The method of claim 9, wherein the plurality of encoding standards comprises MPEG-2 and H.264.
